Europäisches Patentamt

(19) European Patent Office    (11) Numéro de publication: **0 007 251**

Office européen des brevets    **B1**

(12)    **FASCICULE DE BREVET EUROPEEN**

(45) Date de publication du fascicule de brevet: **30.12.81**    (51) Int. Cl.³: **G 21 C  3/32, B 25 B  13/48, F 16 B  39/10**

(21) Numéro de dépôt: **79400176.8**

(22) Date de dépôt: **16.03.79**

(54) Assemblage de combustible nucléaire montable et démontable à distance et outils correspondants.

(30) Priorité: **22.03.78 FR 7808282**

(43) Date de publication de la demande: **23.01.80 Bulletin 80/2**

(45) Mention de la délivrance du brevet: **30.12.81 Bulletin 81/52**

(84) Etats Contractants Désignés: **BE DE GB**

(56) Documents cités:
**FR - A - 1 557 871
FR - A - 1 585 774
FR - A - 2 049 108
FR - A - 2 088 009
FR - A - 2 319 956
FR - A - 2 368 785
US - A - 2 625 967**

(73) Titulaire: **COMMISSARIAT A L'ENERGIE ATOMIQUE Etablissèment de Caractère Scientifique Technique et Industriel B.P. 510 F-75752 Paris Cedex 15 (FR)**

(72) Inventeur: **Levy, Jacques 4, rue Maria Deraisnes F-75017 Paris (FR)** Inventeur: **Viaud, Jean-Luc P.A.5., 72 Les Jardins de Bures F-91440 Bures sur Yvette (FR)**

(74) Mandataire: **Mongrédien, André et al, c/o Brevatome 25, rue de Ponthieu F-75008 Paris (FR)**

Courier Press, Leamington Spa, England.

## Assemblage de combustible nucléaire montable et démontable à distance et outils correspondants. ·

La présente invention a pour objet un assemblage combustible montable et démontable à distance pour réacteur nucléaire et des dispositifs pour la mise en oeuvre des opérations de montage et de démontage dudit assemblage combustible.

De façon plus précise, la présente invention concerne un assemblage combustible pour réacteurs nucléaires du type à eau, cet assemblage combustible étant constitué par des éléments combustibles en forme de crayons fixés dans une structure rigide.

On sait que, dans les réacteurs à eau sous pression, le coeur du réacteur est constitué par un certain nombre d'assemblages combustibles juxtaposés. De façon connue, ces assemblages combustibles sont constitués par des structures mécaniques qui permettent de solidariser un certain nombre d'éléments combustibles constitués essentiellement par le matériau fissile. La présente invention se rapporte au cas où les éléments combustibles sont constitués par des crayons combustibles, c'est-à-dire par des éléments dont la partie active est constituée par un matériau fissile de forme cylindrique allongée placé à l'intérieur d'une gaine de protection réalisée par exemple par une mince couche d'un métal tel que du zircaloy.

La gaine de l'élément combustible constitue une des barrières qui réalise la sûreté du fonctionnement du réacteur. Plus précisément, cette barrière constitue un confinement des gaz et autres produits de fission résultant de la réaction neutronique vis-à-vis du réfrigérant circulant dans la cuve du réacteur et qui est constitué par de l'eau. On comprend qu'il est particulièrement important que cette gaine conserve son intégrité pour éviter la présence de produits de fission dans l'eau de refroidissement, celle-ci sortant de la cuve du réacteur. Lorsqu'on détecte, dans l'eau de refroidissement de ce réacteur une quantité anormale de produits de fission, décelant ainsi une rupture importante de la gaine d'un élément combustible, il est nécessaire d'arrêter le fonctionnement du réacteur pour changer cet assemblage combustible et le remplacer par un assemblage combustible neuf.

Il faut toutefois remarquer qu'un assemblage combustible constitue un produit cher du fait que les éléments combustibles sont eux-mêmes chers et du fait que la structure mécanique qui maintient en place les éléments combustibles dans l'assemblage est constituée par des matériaux relativement chers également. On conçoit qu'il est donc intéressant lorsqu'un seul élément combustible d'un assemblage est défectueux, de pouvoir démonter cet assemblage combustible afin de changer l'élément combustible défectueux. Toutefois, il est bien évident que ce démontage ne peut se faire dans une ambiance normale. Ce démontage peut, par exemple, être fait dans une cellule chaude assurant une isolation entre le personnel chargé d'effectuer cette opération et l'élément combustible. Toutefois, cette opération est fort onéreuse. Une autre solution consiste à sortir l'assemblage combustible de la cuve du réacteur et à le placer dans une piscine de manutention dans laquelle on effectuera les opérations de remplacement de l'élément combustible.

On comprend que ce deuxième type d'opérations présente un double avantage: d'une part, il permet de ne remplacer que l'élément combustible défectueux en conservant la totalité du reste de l'assemblage combustible, d'autre part, il permet d'opérer de façon relativement aisée et dans le cadre d'une installation relativement simple constitué par une piscine.

Cependant, pour que cette opération puisse être mise en oeuvre, il est nécessaire que l'assemblage combustible soit constitué de telle façon que son démontage puisse être effectué à distance.

On a déjà imaginé des systèmes permettant de démonter des assemblages combustibles à distance. Ce démontage concerne essentiellement la désolidarisation d'une des plaques d'extrémité de l'assemblage combustible d'avec les tirants qui constituent le reste de la structure mécanique de l'assemblage combustible. Toutefois, dans les solutions jusqu'ici préconisées, la liaison démontable entre une des extrémités des tirants et une des plaques d'extrémité de l'assemblage combustible présente l'inconvénient suivant; certains des éléments de l'organe d'assemblage et, plus précisément, de l'organe de solidarisation des tirants avec une des plaques d'extrémité, en cas de rupture de cet organe d'assemblage, deviennent libres et peuvent donc librement circuler dans la cuve du réacteur et dans les installations annexes et entraver la circulation du liquide de refroidissement en causant des dégâts matériels notamment dans les tubes d'échangeurs de chaleur.

Un exemple d'une liaison démontable de ce type est décrit dans le brevet FR 7 623 311. En effet, ce brevet décrit un mode particulier de fixation des tirants sur la plaque de base d'un assemblage de combustible nucléaire, selon lequel la fixation est assurée par l'intermédiaire d'une plaque à écrou qui est posée sur la plaque d'extrémité et comporte des douilles qui emprisonnent les écrous par déformation. Les douilles sont donc solidaires d'une plaque rapportée sur la plaque d'extrémité, de sorte qu'on ne peut pas considérer ensemble comme imperdable en cas de défaillance des organes de vissage.

On comprend que de tels organes d'assemblage sont inacceptables.

La présente invention a précisément pour objet un mode d'assemblage d'une des plaques d'extrémités de l'assemblage de combustible nucléaire avec les tirants de cet assemblage combustible qui, d'une part, permet un démontage et un remontage à distance de ces différentes parties de l'assemblage combustible et, d'autre part, assure qu'aucun élément de l'ensemble de solidarisation ne peut être libéré même en cas de rupture de cet ensemble de solidarisation, tout en assurant une solidarisation capable de résister à tous les efforts mécaniques auxquels est soumis l'assemblage combustible. On sait, en particulier, que les assemblages combustibles sont soumis à des vibrations importantes dues à l'écoulement de l'eau de refroidissement dans la cuve du réacteur.

L'invention concerne un assemblage de combustible nucléaire montable et démontable à distance comprenant une structure mécanique constituée par une plaque supérieure, une plaque inférieure et une pluralité de tirants s'étendant entre lesdites plaques, et une pluralité d'éléments combustibles de forme allongée, rendus solidaires des tirants par des grilles, l'une des extrémités de chaque tirant étant fixée de façon inamovible dans la plaque supérieure, l'autre extrémité de chaque tirant étant fixée à la plaque inférieure par un ensemble d'assemblages montable et démontable à distance, qui consiste en un filetage ménagé à l'extrémité de chaque tirant, un organe de vissage comportant un filetage apte à coopérer avec le filetage du tirant et une tête comportant un trou à clef et en un système de fixation de l'organe de vissage, ledit assemblage étant caractérisé en ce que la plaque inférieure comporte un usinage pour chaque tirant, cet usinage étant constitué par un alésage comportant une portion de plus grand diamètre débouchant dans la face externe de ladite plaque afin de recevoir l'organe de vissage, ladite portion de plus grand diamètre étant entourée par une collerette taillée dans ladite plaque, cette collerette étant séparée du reste de la plaque par une gorge annulaire de positionnement d'un dispositif de dévissage, et en ce que le système de fixation comprend ladite collerette dont une partie peut être déformée sur au moins un biseau formé sur la périphérie de l'organe de vissage.

L'invention concerne également trois dispositifs servant, d'une part, au montage de l'assemblage combustible et, d'autre part, à son démontage à distance.

Le dispositif de dévissage pour le démontage à distance de l'assemblage combustible défini ci-dessus, se caractérise en ce qu'il comprend:

— un tube externe formant le corps du dispositif se terminant à sa partie inférieure par un manchon de centrage apte à pénétrer dans une gorge annulaire dudit assemblage muni de moyens de mise en rotation,

— à l'intérieur dudit tube externe, une pièce de commande se terminant vers son extrémité inférieure par un fourreau, ladite pièce étant solidaire en rotation dudit tube externe et mobile en translation selon l'axe dudit tube externe, ladite pièce de commande étant munie de moyens de mise en translation,

— à l'intérieur du fourreau de ladite pièce de commande, des mâchoires formant un tube interne au fourreau, ledit tube interne étant solidaire en rotation et en translation dudit tube externe, lesdites mâchoires étant élastiquement déformables pour serrer l'organe de vissage, lesdites mâchoires comportant extérieurement des rampes de commande aptes à coopérer avec des rampes de commande internes à l'extrémité inférieure du fourreau de la pièce de commande de telle façon que lesdites mâchoires ne soient serrées que lorsque la pièce de commande est en position haute,

— un porte-outil ayant la forme d'une tige mobile en translation par rapport au tube des mâchoires, ladite tige ayant à son extrémité inférieure un outil apte à coopérer avec le trou à clef de l'organe de vissage, et une tringle repère fixée à son extrémité supérieure traversant la pièce de commande par un alésage axial et faisant saillie à l'extrémité supérieure de ladite pièce, ledit porte-outil étant rappelé vers le bas par un système élastique interposé entre ledit porte-outil et le fond du fourreau de ladite pièce de commande.

Le dispositif de remise en forme de la collerette de l'assemblage, après sertissage de ladite collerette se caractérise en ce qu'il comprend une perche de manutention et à l'extrémité inférieure de cette perche, un outil de remise en forme, ledit outil consistant en un mandrin conique et une pièce de centrage par rapport à ladite collerette, la perche constituant sur une partie de sa hauteur un guide en translation pour une masse apte à coulisser le long dudit guide, ladite partie constituant un guide étant munie d'une butée inférieure et d'un mécanisme pour relever ladite masse.

Le dispositif de sertissage de la collerette, après la mise en place de l'organe de vissage se caractérise en ce qu'il comprend une perche de manutention et à l'extrémité inférieure de cette perche, un outil de sertissage comportant une pièce de centrage apte à pénétrer dans le trou borgne de l'organe de vissage, au moins une portée inclinée apte à déformer localement ladite collerette pour l'appliquer sur le ou lesdits biseaux de l'organe de vissage, et des moyens de positionnement pour faire coïncider la ou lesdites portées avec le ou lesdits biseaux, ladite perche constituant sur une partie de sa hauteur un guide en translation pour une masse apte à coulisser le long dudit guide, ladite partie constituant ledit guide étant munie d'une butée inférieure et d'une butée supérieure définissant ainsi la hauteur de chute et exactement l'énergie utile.

De toute façon, l'invention sera mieux comprise à la lecture de la description qui suit d'un mode de réalisation de l'invention donné à titre d'exemple non limitatif. La description se réfère aux figures annexées sur lesquelles on a représenté:

— sur la figure 1, une vue en élévation montrant un assemblage combustible placé dans une piscine de manutention et illustrant l'ensemble de cet assemblage combustible conforme à l'invention;

— sur les figures 2a, 2b et 2c, des vues montrant le détail de l'assemblage d'un tirant de l'assemblage combustible avec la plaque inférieure et la déformation de la collerette sur l'organe de vissage;

— sur la figure 3, une vue en coupe verticale de l'ensemble de l'outil de dévissage;

— sur les figures 4 et 5, des vues en coupe verticale de la partie inférieure de l'outil de dévissage montrant le "tournevis" et les mâchoires dans différentes positions;

— sur la figure 6, une vue de détail de l'extrémité inférieure de l'outil de dévissage;

— sur la figure 7, deux demi-vues montrant l'extraction de l'écrou de fixation de la plaque inférieure;

— sur la figure 8, une vue en élévation de la perche servant pour les outils de sertissage et de remise en forme de la collerette;

— sur la figure 9, l'extrémité inférieure de l'outil de remise en forme de la collerette dans le cas d'une vis de fixation;

— sur la figure 10, l'extrémité inférieure de l'outil de remise en forme de la collerette dans le cas d'un écrou de fixation, et

— sur la figure 11, l'extrémité inférieure de l'outil de sertissage de la collerette sur l'écrou ou la tête de la vis.

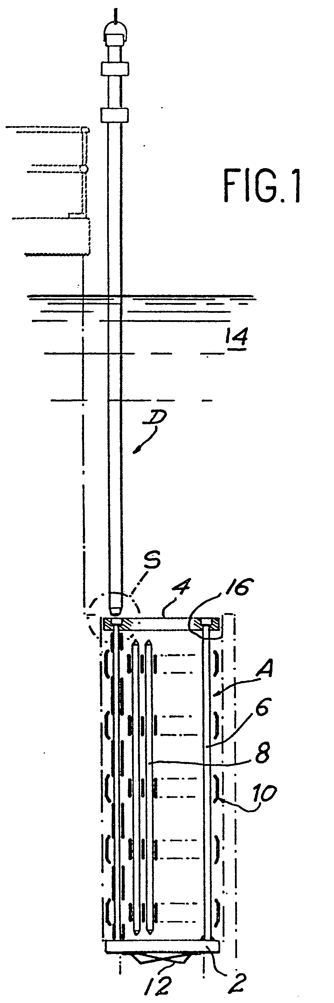

Sur la figure 1, on a représenté un assemblage combustible conforme à l'invention placé dans une piscine de manutention 14. De façon connue, cet assemblage combustible qui porte la référence générale A est constitué par une plaque supérieure 2, une plaque inférieure 4 et par des tirants 6 fixés à chacune de leurs extrémités dans les plaques 2 et 4. Cet ensemble de pièces constitue la structure rigide de l'assemblage combustible sur laquelle sont fixés les éléments combustibles proprement dits. En fait, les éléments combustibles 8 sont fixés dans l'assemblage A par l'intermédiaire de grilles 10 qui assurent la liaison entre les éléments combustibles 8 et les tirants 6. Selon les types d'assemblages combustibles, soit les grilles 10 sont solidaires des tirants 6 et les éléments combustibles 8 sont seulement pincés dans les grilles, soit les grilles 10 sont montées coulissantes sur les tirants. L'assemblage A objet de l'invention comporte l'ensemble de ces éléments connus et il concerne plus particulièrement la liaison S entre la plaque inférieure 4 et l'extrémité inférieure des tirants 6, cette liaison étant telle qu'elle puisse être montée et démontée à distance tout en assurant une solidarisation d'une très grande fiabilité. Dans les assemblages selon l'invention, la liaison entre la plaque supérieure 2 et l'extrémité supérieure des tirants 6 est assurée par tout moyen connu non démontable tel que par dudgeonnage. Selon l'une des caractéristiques de l'assemblage combustible objet de l'invention, l'organe démontable S concerne la liaison entre les tirants et la plaque inférieure 4. En effet, la plaque supérieure 2 est munie entre autres, de lames élastiques telles que 12 qui permettent le maintien en place des assemblages combustibles dans le coeur du réacteur. En effet, dans les réacteurs nucléaires à eau sous pression du type classique, l'assemblage combustible repose par sa plaque inférieure 4 sur une grille de supportage du coeur et les assemblages combustibles sont maintenus en place par une grille supérieure qui coopère avec les lames élastiques 12. En plaçant les organes de solidarisation des tirants avec une des plaques dans la plaque inférieure 4, on dispose de davantage de place pour intervenir sur ces organes de solidarisation.

On comprend que, pour effectuer le démontage ou le remontage de l'assemblage combustible en vue du changement d'un élément combustible 8, la première opération consiste dans l'extraction de l'assemblage combustible de la cuve du réacteur, dans la mise en place de cet assemblage combustible dans la piscine de manutention 14, dans le retournement de cet assemblage combustible et dans sa mise en place dans une position de travail 16 ménagée dans la piscine 14. Dans cette position, on peut faire intervenir les outils décrits succinctement ci-dessus et, en particulier, l'outil D de dévissage des organes de fixation de la plaque inférieure avec les tirants.

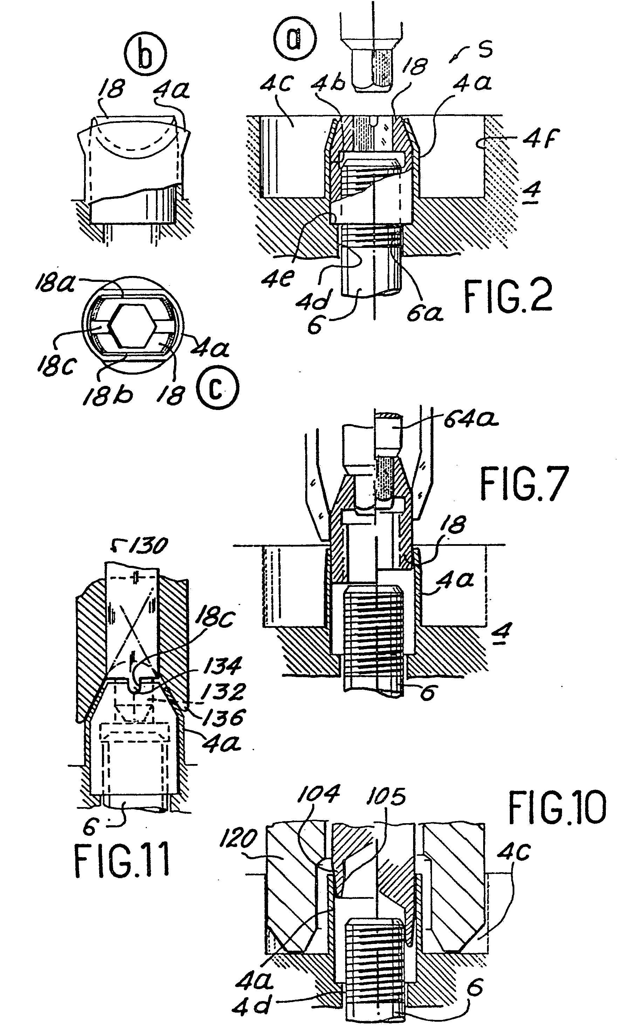

Sur la figure 2a, on a représenté plus en détail l'assemblage A ou plus précisément, la solidarisation S entre l'extrémité inférieure d'un tirant 6 et la plaque inférieure 4. Dans ce mode de réalisation, la solidarisation est assurée par la coopération de la partie filetée 6a du tirant 6 avec un écrou 18 vissé sur la partie filetée A. Pour cela, la face inférieure de la plaque inférieure 4 comporte des dispositions particulières. Elle comprend essentiellement une collerette cylindrique 4a suffisamment fine pour être déformée, mais suffisamment résistante pour ne pas se rompre sous l'effet de cette déformation. Cette collerette 4a limite intérieurement un alésage 4b susceptible de recevoir l'écrou 18 et extérieurement une gorge annulaire de positionnement 4c ménagée dans la plaque 4. L'alésage 4b se poursuit dans la plaque 4 par un alésage 4d de diamètre réduit dans lequel peut pénétrer le tirant 6. Les alésages 4b et 4d sont raccordés par une portée 4e sur laquelle vient s'appuyer l'écrou 18 lorsque celui-ci est vissé.

Comme on le voit mieux sur les figures 2b et 2c, l'écrou 18 comporte deux biseaux 18a et une tête creuse 18b par exemple à six pans. En outre, cet écrou comporte une fente 18c de positionnement. On comprend que, après vissage de l'écrou 18, sur le tirant 6, on peut immobiliser cet écrou par rapport au tirant en déformant par matage une partie de la collerette 4a pour venir plaquer celle-ci sur les biseaux 18a de l'écrou 18. C'est ce qu'on a représenté sur la figure 2c. On comprend que, par ailleurs, la collerette 4a faisant partie intégrante de la plaque inférieure 4, en cas de rupture du tirant 6, l'écrou 18 et la partie cassée du tirant 6 sont maintenus en place par la collerette 4a déformée. L'écrou peut être remplacé par une vis. Dans ce cas, le filetage externe du tirant est remplacé par un trou taraudé axial à l'extrémité du tirant. La partie filetée de la vis coopère avec le trou taraudé.

On comprend à la lumière de la description précédente que les différentes opérations pour le montage de l'assemblage combustible et son démontage sont les suivantes:

— pour le montage, il s'agit de visser l'écrou 18 sur le tirant 6 et lorsque ce vissage est effectué, de mater la collerette 4a pour appliquer une partie de cette collerette sur les biseaux 18a. Cette opération est réalisée à l'aide de l'outil M;

— pour le démontage de l'assemblage, il faut, d'une part, dévisser à force l'écrou 18, ce qui assure en même temps le dématage de la collerette 4a et, d'autre part, extraire l'écrou 18 par pinçage de celui-ci. Cette double opération est mise en oeuvre par l'outil de dévissage D.

Enfin, pour pouvoir placer un nouvel écrou en vue du remontage de l'assemblage combustible, il est nécessaire de reformer la collerette 4a pour permettre la mise en place d'un nouvel écrou 18. Ceci est réalisé à l'aide d'un outil de remise en forme de la collerette qui porte la référence R.

Comme on l'a déjà indiqué, l'outil D de dévissage de la vis ou de l'écrou remplit une double fonction, d'une part, il permet de dévisser l'écrou ou la vis afin de désaccoupler la plaque inférieure et les tirants et, d'autre part, il permet, lorsque ce dévissage est terminé, de saisir l'écrou ou la tête de la vis afin de l'extraire de la piscine de démontage. Cet outil permet en outre, grâce à la présence de la gorge 4c, de positionner la partie inférieure de l'outil D par rapport à l'écrou ou à la tête de la vis. Enfin, cet outil permet de contrôler à distance que le dévissage de l'organe de fixation est terminé et qu'on peut donc extraire l'organe de fixation.

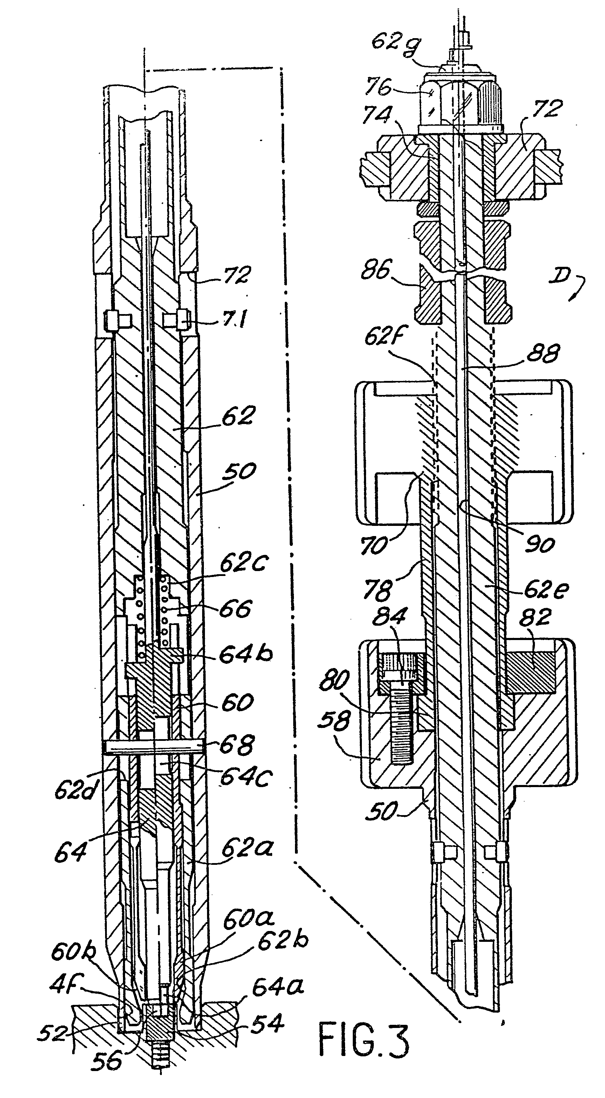

Sur la figure 3, on a représenté de façon simplifiée l'ensemble de l'outil D. Plus précisément, la demi-vue de gauche représente la partie inférieure de l'outil avec les organes actifs et la demi-vue de droite la partie courante de l'outil ainsi que sa tête de supportage.

L'outil D comporte un tube externe 50 qui se termine à son extrémité inférieure par un manchon de centrage 52 apte à coopérer avec la paroi latérale externe 4f de la gorge 4. Ce manchon assure ainsi le centrage 2 par rapport à l'organe d'assemblage qui, sur la figure 3, est une vis 54 dont la tête comporte un creux 56. A son autre extrémité, le tube externe 50 est solidaire d'un volant de manoeuvre 58 permettant la mise en rotation de l'ensemble de l'outil comme on le verra ultérieurement. A l'intérieur du tube externe 50, on trouve un tube interne 60 se terminant par des mâchoires de serrage 60a aptes à saisir l'organe d'assemblage. Ce tube 60 avec ses mâchoires 60a est logé à l'intérieur d'une pièce 62 de commande de l'ouverture des mâchoires 60a. Pour cela, la pièce 62 se termine par une partie tubulaire 62a entourant le tube interne 60. Vers son extrémité inférieure, la partie 62a de la pièce de commande 62 comporte une rampe interne conique 62b susceptible de coopérer avec la portée externe 60d tronconique des mâchoires 60a. On comprend que, lorsque la partie tubulaire 62a est en position basse, la mâchoire 60a est expansée, c'est-à-dire qu'elle n'assure pas de serrage alors que lorsque la partie tubulaire 62a est en position haute, la rampe tronconique 62d s'applique sur les mâchoires 60a et provoque leur serrage.

A l'intérieur du tube interne 60 portant les mâchoires 60a, on trouve une pièce 64 ayant la forme d'une tige. L'extrémité inférieure de cette pièce 64 qui porte la référence 64a constitue un outil de dévissage dont la forme est apte à coopérer avec le creux 56 de la vis 54. La tige 64 portant l'outil de dévissage 64a est libre en translation par rapport au tube interne 60 et à la pièce 62 de commande des mâchoires. Plus précisément, la tige 64 comporte une tête 64b et un ressort hélicoïdal portant la référence 66 est interposé entre cette tête 64b et une portée 62c de la pièce 62. Ce ressort 66 tend à faire sortir la tige 64 hors des mâchoires 60a. Une clavette transversale 68 assure la solidarisation en rotation de la tige 64 du tube interne 60 de la partie tubulaire 62a de l'organe de commande 62 des mâchoires et du tube externe 50. Cependant, la partie tubulaire 62a comporte des lumières 62d permettant un déplacement limité en translation de la pièce 62 par rapport au tube externe 50. De même, une fente 64c autorise un déplacement relatif en translation de la tige 64 par rapport au tube interne 60. Des pions d'immobilisation en rotation tels que 71 solidaires de la pièce 62, en coopérant avec des lumières telles que 72 ménagées dans le tube interne 50, améliorent encore la solidarisation en rotation du tube externe 50 avec la pièce 62.

Le prolongement supérieur 62e de la pièce 62 comporte une partie filetée 62f apte à coopérer avec un volant 70 de commande de la pièce 62. A son extrémité supérieure, le prolongement 62e traverse une pièce de supportage 72 dans laquelle elle est montée tourillonnante. Le supportage est constitué par le coussinet 74 solidaire de la pièce 12 et par l'écrou 76 vissé sur l'extrémité 62g du prolongement 62e. Le volant 70 se prolonge vers le bas par un manchon 78 comportant un épaulement 80. L'immobilisation en translation du volant 70 est assurée par une rondelle 82 vissée par les vis 84 dans le volant 58 qui emprisonne l'épaulement 80. Un fourreau 86 entoure la partie supérieure du prolongement 62e en-dessous de la pièce de supportage 72. En outre, la tige 64 comporte une tringle 88 qui la prolonge et qui traverse le prolongement 62e dans son alésage 90. L'extrémité supérieure de cette tringle 88 est libre et constitue un témoin du déplacement de l'extrémité active 64a de la tige 64.

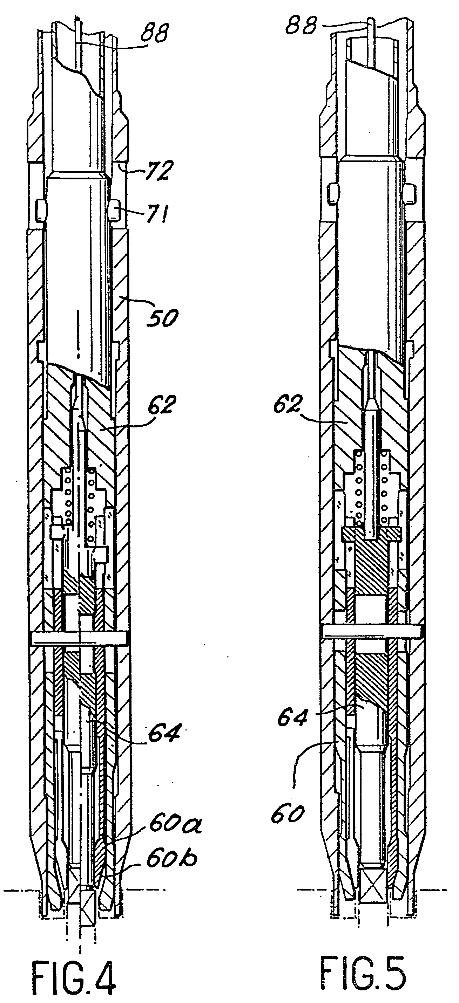

La mise en oeuvre de l'outil D se fait de la façon suivante. L'assemblage à démonter A étant placé dans la position représentée sur la figure 1, on met en place l'outil D à l'aide de la pièce de supportage 72. Le positionnement de l'outil est assuré par la coopération de la gorge 4c avec le manchon de positionnement 52 dont l'extrémité inférieure est chanfreinée. L'outil D est alors en butée sur le fond de la gorge 4c (figure 3 partie de droite de la vue de gauche). En faisant tourner avec le volant 58 l'ensemble de l'outil D, on amène l'extrémité active 64a de la tige 64 en coïncidence avec le six-pans creux 56 de la vis 54 et l'extrémité 64a pénètre dans l'orifice 56 sous l'effet du ressort 66 (demi-vue de droite de la figure 4). Les mâchoires 60a sont en position écartée. En tournantdans un sens convenable le volant 58, on provoque le dévissage de la vis 54. Au fur et à mesure de ce dévissage, le ressort 66 se comprime. Le dévissage est contrôlé par la position de l'extrémité de la tringle 88 (demi-vue de gauche de la figure 4).

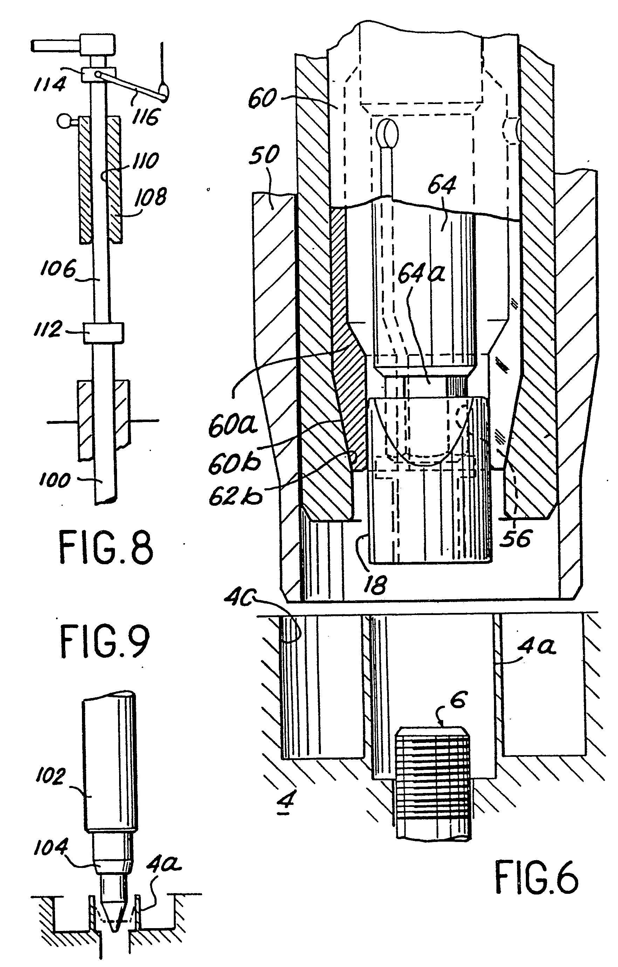

Lorsque le dévissage est terminé, on vient saisir avec les mâchoires 60a l'organe de fixation 54. Pour cela, on agit sur le volant de commande 70 qui provoque la rotation de la pièce de commande 62 et, plus précisément, son relèvement. La rampe tronconique 62b vient agir sur les mâchoires 60a en assurant le serrage de celle-ci sur la tête de l'organe de vissage 54 (figure 5). Une fois qu'un serrage suffisant a été obtenu, l'assemblage de la plaque supérieure avec les tirants est détruit et l'organe de vissage 54 est pris en charge par l'outil D. Il suffit alors de relever l'ensemble de l'outil pour remonter la vis 54 sans risque de perte (figure 6). Pour extraire l'organe de vissage 54 de l'outil D, il suffit d'agir sur le volant 70 pour provoquer l'écartement des mâchoires 60a. Dans cette situation et sous l'effet du ressort 66, l'organe de vissage 54 est éjecté de l'outil. Au cas où cette éjection ne se serait pas effectivement produite, il est toujours possible d'agir sur la tringle 88 pour obtenir effectivement cette éjection.

On comprend que l'outil D remplit l'ensemble des fonctions qui lui cont dévolues, à savoir son positionnement par rapport à l'organe de vissage 54 grâce à la gorge 4c, le dévissage de l'organe de vissage 54 qui s'accompagne d'un forcement du freinage assuré par la déformation de la collerette 4a, la saisie de l'organe de vissage 54 après son dévissage par les mâchoires 60a et l'extraction de la cuve de l'organe d'assemblage sans aucun risque de perte. Par ailleurs, on comprend que l'outil D permet d'accomplir toutes ces opérations avec une visibilité réduite et à une distance qui correspond à la hauteur d'eau dans la piscine 14 nécessaire pour assurer la protection biologique vis-à-vis de l'assemblage A qui est irradié.

On va décrire maintenant les outils qui permettent d'obtenir d'une part le vissage de l'organe de vissage 54 et le matage de la collerette 4a pour assurer le freinage de l'organe d'assemblage et d'autre part, l'outil qui permet d'obtenir la remise en forme de cette couronne 4a en vue de la remise en place de l'organe d'assemblage.

L'outil R de remise en forme de la collerette 4a comporte une perche 100 de manoeuvre à l'extrémité inférieure de laquelle est fixé l'outil proprement dit 102. L'outil proprement dit se compose d'un mandrin tronconique 104 dont l'extrémité inférieure sert au centrage de l'outil par coopération avec l'alésage 4d de la plaque 4. Le mandrin 104 est un cône dont la pente est de l'ordre de 10°.

La perche 100 sert non seulement à guider à distance l'outil 102, mais également à lui appliquer une force tarée nécessaire pour obtenir le reformage de la collerette 4a. La partie supérieure 106 de la perche sert de guide en translation pour la masse calibrée 108. La masse 108 est munie d'un alésage central 110 qui coopère avec le guide 106. Une butée 112 limite vers le bas la course de la masse tandis qu'une butée supérieure 114 associée à l'organe de relevage 116 permet d'assurer la répétitivité de l'effort appliqué.

Selon le matériau dont est faite la collerette, on laissera tomber la masse un plus ou moins grand nombre de fois. Une poignée 116 permet de faire tourner l'ensemble de l'outil. Cet outil correspond au cas où l'organe de vissage est la vis 54. Dans le cas où cet organe est un écrou, il faut changer la forme de l'outil comme cela est représenté sur la figure 10. Comme l'alésage 4d est occupé par l'extrémité supérieure filetée du tirant, il ne peut plus servir au centrage de l'outil. Ce centrage peut être obtenu par une jupe cylindrique 120 qui coopère avec la face externe de la gorge 4c. L'outil comporte toujours la partie tronconique 104 mais il est muni en haut d'un trou borgne 105 dû à la présence de l'extrémité supérieure du tirant.

L'outil de sertissage M est fixé au bout d'une perche identique à celle qui est représentée sur la figure 11. L'outil proprement dit 130 comprend une extrémité de centrage 132 et deux nervures de détrompage 134 (une seule étant visible) pour coopérer avec une rainure correspondante 18c sur l'organe de vissage. En outre, l'outil comporte une jupe externe 136 d'un diamètre supérieur à celui de la collerette 4a, la jupe étant munie de deux portées internes inclinées pour assurer le sertissage de la collerette 4a sur les portées 18a de sertissage de l'écrou 18 ou de la vis 54.

## Revendications

1. Assemblage de combustible nucléaire montable et démontable à distance comprenant une structure mécanique constituée par une plaque supérieure (2), une plaque inférieure (4) et une pluralité de tirants (6) s'étendant entre lesdites plaques, et une pluralité d'éléments combustibles de forme allongée (8) rendus solidaires des tirants par des grilles (10) l'une des extrémités de chaque tirant étant fixée de façon inamovible dans la plaque supérieure, l'autre extrémité de chaque tirant étant fixée à la plaque inférieure par un ensemble d'assemblage montable et démontable à distance, qui consiste en un filetage (6a) ménagé à l'extrémité de chaque tirant, un organe de vissage (18, 54) comportant un filetage apte à coopérer avec le filetage du tirant et une tête comportant un trou à clef et en un système de fixation de l'organe de vissage, ledit assemblage étant caractérisé en ce que la plaque inférieure comporte un usinage pour chaque tirant, cet usinage étant constitué par un alésage comportant une portion de plus grand diamètre (4b) débouchant dans la face externe de la plaque afin de recevoir l'organe de vissage, ladite portion de plus grand diamètre étant entourée par une collerette (4a) taillée dans ladite plaque, cette collerette étant séparée du reste de la plaque par une gorge annulaire (4c) de positionnement d'un dispositif de dévissage, et en ce que le système de fixation comprend ladite collerette dont une partie peut être déformée sur au moins un biseau (18a) formé sur la périphérie de l'organe de vissage.

2. Assemblage combustible selon la revendication 1, caractérisé en ce que l'organe de vissage est un écrou (18), l'extrémité supérieure du tirant (16) étant filetée extérieurement et pénétrant dans la portion de plus grand diamètre (46).

3. Assemblage combustible selon la revendication 1, caractérisé en ce que l'organe de vissage est une vis (54), l'extrémité du tirant (6) comportant un trou axial taraudé apte à coopérer avec le filetage de la vis.

4. Dispositif de dévissage pour le démontage à distance d'un assemblage combustible selon l'une quelconque des revendications 1 à 3, comportant au moins une plaque inférieure (4), des tirants (6) et une pluralité d'ensembles d'assemblage de ladite plaque à l'extrémité desdits tirants, chaque ensemble d'assemblage consistant en un organe de vissage (18, 54) entouré par une collerette cylindrique (4a) elle-même entourée par une gorge annulaire (4c), ces éléments étant usinés dans ladite plaque supérieure, ledit dispositif se caractérisant en ce qu'il comprend: un tube externe (50) formant le corps du dispositif se terminant à sa partie inférieure par un manchon de centrage (52) apte à pénétrer dans une gorge annulaire dudit assemblage, et muni de moyens (58) de mise en rotation, à l'intérieur dudit tube externe, une pièce de commande (62) se terminant vers son extrémité inférieure par un fourreau (62a), ladite pièce étant solidaire en rotation dudit tube externe et mobile en translation selon l'axe dudit tube externe, ladite pièce de commande étant munie de moyens (70) de mise en translation, à l'intérieur du fourreau de ladite pièce de commande, des mâchoires (60a) formant un tube (60) interne au fourreau, ledit tube interne étant solidaire en rotation et en translation dudit tube externe, lesdites mâchoires étant élastiquement déformables pour serrer l'organe de vissage, lesdites mâchoires comportant extérieurement des rampes de commande (60b) aptes à coopérer avec des rampes de commande (62b) internes à l'extrémité inférieure du fourreau de la pièce de commande, de telle façon que lesdites mâchoires ne soient serrées que lorsque la pièce de commande est en position haute, un porte-outil (64) ayant la forme d'une tige mobile en translation par rapport au tube des mâchoires, ladite tige ayant à son extrémité inférieure un outil (64a) apte à coopérer avec le trou à clef de l'organe de vissage, et une tringle repère (88) fixée à son extrémité supérieure traversant la pièce de commande par un alésage axial (90) et faisant saillie à l'extrémité supérieure de ladite pièce, ledit porte-outil étant rappelé vers le bas par un système élastique (66) interposé entre ledit porte-outil et le fond du fourreau de ladite pièce de commande.

5. Dispositif selon la revendication 4, caractérisé en ce que la pièce de commande (62) sort du tube externe (50) à sa partie supérieure et est munie à son extrémité supérieure de moyens de supportage (74, 76) du dispositif et en ce que les moyens de mise en translation de l'élément de commande consistent en un volant (70) comportant un alésage taraudé apte à coopérer avec un filetage externe ménagé sur la partie de la pièce de commande qui fait saillie hors du tube externe, ledit volant étant immobilisé en translation par rapport audit tube externe.

6. Dispositif de remise en forme d'une collerette d'un assemblage combustible selon l'une quelconque des revendications 1 à 3, après le sertissage de ladite collerette, caractérisé en ce qu'il comprend une perche de manutention (100) et à l'extrémité inférieure de cette perche, un outil (102) de remise en forme, ledit outil consistant en un mandrin conique (104) et une pièce de centrage (120) par rapport à ladite collerette, la perche constituant sur une partie de sa hauteur un guide en translation pour une masse (108) apte à coulisser le long dudit guide, ladite partie constituant un guide étant munie d'une butée inférieure (112) et d'un mécanisme (114, 116) pour relever ladite masse.

7. Dispositif de sertissage de la collerette d'un assemblage combustible selon l'une quelconque des revendications 1 à 3, caractérisé en ce qu'il comprend une perche de manutention (100) et à l'extrémité inférieure de cette perche, un outil de sertissage (102) comportant une pièce de centrage apte à pénétrer dans l'orifice de l'organe de vissage, au moins une portée inclinée (104) apte à déformer localement ladite collerette pour l'appliquer sur le ou lesdits biseaux de l'organe de vissage, et des moyens de positionnement pour faire coïncider la ou lesdites portées avec le ou lesdits biseaux, ladite perche constituant sur une partie de sa hauteur un guide en translation pour une masse (108) apte à coulisser le long dudit guide, ladite partie constituant ledit guide étant munie d'une butée inférieure (112) et d'un mécanisme (114, 116) pour remonter ladite masse.

## Claims

1. A nuclear fuel unit that can be remotely assembled and disassembled comprising a mechanical structure constituted by an upper plate (2), a lower plate (4), and a plurality of rods (6) extending between the said plates, and a plurality of elongate fuel elements (8) rigidly held to the rods by grilles (10), one end of each rod being fixed immovably in the upper plate, the other end of each rod being fixed in the lower plate by an assembly means that can be remotely assembled and disassembled, which comprises a threaded portion (6a) at the end of each rod, a screwing component (18, 54) having a threaded portion adapted to cooperate with the threaded portion of the rod and a head having a key port, and fixing means for the screwing component, said unit being characterized in that the lower plate comprises a station for each rod, said station comprising a bore having a portion of greater diameter (4b) opening into the external face of said plate to receive the screwing component, said portion of greater diameter being surrounded by a flange formed in the plate, said flange being separated from the rest of the plate by an annular recess (4c) for positioning an unscrewing tool, and in that the system of fixation comprises the said flange a part of which is capable of deformation by at least one chamfer (18a) formed in the periphery of the screwing component.

2. Fuel unit according to Claim 1 characterized in that the screwing component is a nut (18), the upper end of the rod (16) being externally threaded and extending into the portion of greater diameter (4b).

3. Fuel unit according to Claim 1 characterized in that the screwing component is a bolt (54), the end of the rod (6) having a tapped axial bore, adapted to cooperate with the thread of the bolt.

4. Unscrewing apparatus for the remote disassembly of a fuel unit according to any one of Claims 1 to 3, comprising at least one lower plate (4), rods (6) and a plurality of assembly means in the said plate at the end of said rods, each assembly means comprising a screwing component (18, 54) surrounded by a cylindrical flange (4a) itself surrounded by an annular recess (4c), these elements being formed in the said upper plate, said apparatus being characterized in that it comprises: an external tube (50) forming the body of the apparatus and terminating at its lower end in a centering sleeve (52) adapted to enter an annular recess of the said unit, and provided with rotation means (58), in the interior of said external tube, a drive means (62) terminating at its lower end in a sheath (62a), said drive means being rotatable in unison with said external tube, and movable along the axis of said external tube, said drive means having at least one advancing means (70), in the interior of the sheath of said drive means, jaws (60a) forming an internal tube of the sheath, said internal tube being rotatable and movable in unison with the said external tube, said jaws being elastically deformable to grip the screwing means, said jaws having external tapered portions adapted to cooperate with internal tapered portions of the sheath of the drive means, in such a manner that the said jaws only grip when the drive means is in an upper position, a tool holder (64) in the form of a rod extendable with relation to the tube of the jaws, said rod having at its lower end a tool adapted to cooperate with the key port of the screwing means, and a graduated rod (88) fixed at its upper end, passing through an axial bore (90) in the drive means and projecting at the upper end of said drive means, said tool holder being urged downwards by an elastic system (66) interposed between said tool holder and the bottom of the sheath of said drive means.

5. Apparatus according to Claim 4, characterized in that the drive means (62) extends beyond the upper end of the external tube and has, at the upper end, tool support means (74, 76), and in that the advancing means for the drive means comprises a wheel (70) having a tapped bore adapted to cooperate with an external thread on the part of the drive means extending beyond the external tube, said wheel being immobilised in axial movement with reference to the external tube.

6. Reshaping apparatus for a flange of a fuel unit according to any one of Claims 1 to 3 after crimping of the flange, characterized in that it comprises a handling rod (100) with a reshaping tool (102) at the lower end of that rod, the said tool comprising a conical mandrel (104) and a centering piece (120) for said flange, said rod having on part of its length a guide for axial movement of a mass (108) adapted to move along said guide, said guide part having a lower stop (112) and a lifting mechanism, (114, 116) for said mass.

7. Crimping apparatus for the flange of a fuel unit according to any one of Claims 1 to 3, characterized in that it comprises a handling rod (100) having at its lower end a crimping tool (102) comprising a centering piece adapted to enter the orifice of the screwing component, at least one inclined plane adapted to deform locally said flange and to fit it to said chamfer or chamfers of the screwing component, and positioning means to align said plane or planes with said chamfer or chamfers, said rod having on part of its length a guide for axial movement of a mass (108) adapted to move along said guide, said guide part having a lower stop (112) and a lifting mechanism (114, 116) for said mass.

Patentansprüche

1. Unter Fernbedienung montierbarer und demontierbarer Reaktorkern mit einem aus einer oberen Platte (2), einer unteren Platte (4) und einer Anzahl von sich zwischen den Platten erstreckenden Zugstangen (6) gebildeten mechanischen Gerüst und einer Anzahl von Brennstoffelementen (8) von langegestreckter Form, welche, durch Gitter (10) starr mit den Zugstangen verbunden sind, wobei ein Ende jeder Zugstange nicht lösbar in der oberen Platte befestigt ist und das andere Ende jeder Zugstange an der unteren Platte mittels einer unter Fernbedienung montierbaren und demontierbaren Befestigungsanordnung befestigt ist, welche aus einem Gewinde (6a) am Ende jeder Zugstange, einem Schraubelement (18, 54) mit einem mit dem Gewinde der Zugstange in Eingriff bringbaren Gewinde und einem eine Bohrung für den Angriff eine Werkzeugs aufweisenden Kopf, und einer Sicherungseinrichtung für das Schraubelement besteht, wobei die Befestigungsanordnung dadurch gekennzeichnet ist, daß die untere Platte für jede Zugstange eine Sitzanordnung aufweist, welche aus einer Bohrung mit einem an der Außenseite der Platte ausmündenden, einen größeren Durchmesser aufweisenden Abschnitt (4b) für die Aufnahme des Schraubelements, einem den den größeren Durchmesser aufweisenden Abschnitt umgebenden, aus der Platte geschnittenen Ringsteg (4a) und einer den Ringsteg vom Rest der Platte trennenden Ringnut (4c) für die Ausrichtung eines Demontagewerkzeugs gebildet ist, und daß die Sicherungseinrichtung durch den Ringsteg gebildet ist, von welchem ein Teil über wenigstens einer am Umfang des Schraubelements gebildeten Abschrägung (18a) verformbar ist.

2. Reaktorkern nach Anspruch 1, dadurch gekennzeichnet, daß das Schraubelement eine Mutter (18) ist und daß das obere Ende der Zugstange (16) ein Außengewinde aufweist und in den den größeren Durchmesser aufweisenden Abschnitt (46) hineinragt.

3. Reaktorkern nach Anspruch 1, dadurch gekennzeichnet, daß das Schraubelement eine Schraube (54) ist und daß das Ende der Zugstange (6) eine mit dem Gewinde der Schraube in Eingriff bringbare Axial-Gewindebohrung aufweist.

4. Schraubvorrichtung für die ferngesteuerte Demontage eines Reaktorkerns nach einem der Ansprüche 1 bis 3, welcher wenigstens eine untere Platte (4), eine Anzahl von Zugstangen und eine Anzahl von die Platte mit den Enden der Zugstangen verbindenden Befestigungsanordnungen aufweist, welche ihrerseits jeweils aus einem Schraubelement (18, 54), einem dieses umgebenden, einstückig aus der Platte geformten, zylindrischen Ringsteg (4a) und einer diesen umgebenden, in der oberen Platte geformten ringförmigen Nut (4c) bestehen, gekennzeichnet durch ein den Körper der Vorrichtung darstellendes Außenrohr (50), welches an seinem unteren Teil in einer in die ringförmige Nut einer Befestigungsanordnung einführbaren Zentrierbuchse (52) ausläuft und mittels dafür vorgesehener Einrichtungen (58) in Drehung versetzbar ist, durch ein im Außenrohr angeordnetes, unverdrehbar und in Axialrichtung verschieblich mit diesem verbundenes Steuerteil (62), welches an seinem unteren Ende in einer Zwinge (62a) ausläuft und mittels dafür vorgesehener Einrichtungen (70) verschiebbar ist, durch eine in der Zwinge des Steuerteils angeordnete, ein unverdrehbar und in Axialrichtung unverschieblich mit dem Außenrohr verbundenes Innenrohr (60) darstellende Anordnung von zum Ergreifen des Schraubelements elastisch verformbaren Backen (60a) mit an den Außenseiten geformten Kämmflächen (60b), welche derart mit an der Innenseite des unteren Endes der Zwinge des Steuerteils geformten Kämmflächen (62b) zusammenwirken, daß die Backen nur bei in der oberen Stellung befindlichem Steuerteil zusammengeschlossen sind, und durch einen Werkzeugträger (64) in Form einer relativ zum Innenrohr der Backen verschieblichen Stange, welche am unteren Ende ein mit der Bohrung des Schraubelements in Eingriff bringbares Werkzeug (64a) und am oberen Ende einen eine Axialbohrung (90) des Steuerteils durchsetzenden und am oberen Ende desselben daraus hervorstehenden Anzeigesteb (88) trägt und durch eine zwischen dem Werkzeugträger und dem Boden der Zwinge des Steuerteils angeordnete elastische Einrichtung (66) abwärts belastet ist.

5. Vorrichtung nach Anspruch 4, dadurch gekennzeichnet, daß das Steuerteil mit seinem oberen Teil aus Dem Außenrohr (50) hervorsteht und an seinem oberen Ende mit Trageinrichtungen (74, 76) für die Vorrichtung versehen ist, und daß die Einrichtungen zum Verschieben des Steuerteils (62) ein in Axialrichtung unbeweglich mit dem Außenrohr verbundenes Rad (70) aufweisen, welches mit einer Gewindebohrung für den Eingriff mit einem Außengewinde an dem aus dem Außenrohr hervorstehenden Teil des Steuerteils versehen ist.

6. Vorrichtung zum Rückformen eines zuvor verformten Ringstegs an einem Reaktorkern nach wenigstens einem der Ansprüche 1 bis 3, gekennzeichnet durch eine Tragstange (100), durch ein am unteren Ende der Tragstange angeordnetes Rückformwerkzeug (102), welches einen konischen Dorn (104) und ein Zentrierstück (120) zum Zentrieren des Werkzeugs auf den Ringsteg aufweist, durch eine an einem oberen Teil der Tragstange gebildete Führung für ein in Längsrichtung derselben bewegliches Gewicht (108), durch einen am unteren Ende der Führung angeordneten Anschlag (112) und durch eine Anordnung (114, 116) zum Heben des Gewichts.

7. Vorrichtung zum Verformen eines Ringstegs an einem Reaktorkern nach wenigstens einem der Ansprüche 1 bis 3, gekennzeichnet durch eine Tragstange (100), durch ein am unteren Ende der Tragstange angeordnetes Verformungswerkzeug (102) mit einem in die Bohrung des Schraubelements einführbaren Zentrierstück, wenigstens einer Schrägfläche (104) für örtliche Verformung des Ringstegs in Anlage an der oder den Abschrägungen des Schraubelements und einer Einrichtung zum Ausrichten der Schrägfläche(n) auf die Abschrägung(en) des Schraubelements, durch eine an einem oberen Teil der Tragstange gebildete Führung für ein in Längsrichtung derselben bewegliches Gewicht (108), durch einen am unteren Ende der Führung angeordneten Anschlag (112) und durch eine Anordnung (114, 116) zum Heben des Gewichts.

FIG.1

14

D

S

4    16

A

6

8

10

12    2

1

0 007 251

FIG.2

FIG.7

FIG.10

FIG.11

0 007 251

FIG.3

FIG.4

FIG.5

FIG.8

FIG.9

FIG.6